# EUROPEAN PATENT APPLICATION

(11) **EP 2 614 728 A1**
(43) Date of publication of application: **17.07.2013**
(21) Application number: 12382009.4
(22) Date of filing: 13.01.2012
(51) Int. Cl.: A23L 1/32

(54) **Flavored eggs**

(71) Applicant: Sanitest S.L., 30009 Murcia (ES)
(72) Inventor: Martinez Monzó, Javier, 30009 Murcia (ES); García Segovia, Purificación, 30009 Murcia (ES)
(74) Representative: Pons Ariño, Angel

(57) **Abstract**

The present invention relates to a new type of eggs which are impregnated with the aroma of other food products so they have an added value in such a way that may be more attractive from an organoleptic point of view to the final consumer. The present invention further relates to a process by which eggs are obtained with the aroma of scented as stated above in other food products. Eggs obtained in accordance with the process of the present invention does not alter the nutritional characteristics of them. Finally, the present invention also relates to a food product comprising a new type of eggs and the use of that product for human consumption and / or animal.

## Description

### FIELD OF THE INVENTION

The present invention relates to a new type of eggs which are impregnated with the aroma of other food products so that they have added value in such a way that may be more attractive from an organoleptic point of view to the final consumer. The present invention further relates to a procedure by which eggs are obtained with the aroma of other food products. The nutritional characteristics of eggs obtained in accordance with the process of the present invention are not altered. Finally, the present invention also relates to a food product comprising a new type of eggs and the use of that product for human consumption and / or animal.

The present invention is within the field of food technology

### STATE OF THE ART

Bird eggs are a common and basic food in humans. Eggs are protected by a shell and they are rich in proteins and lipids. They are an easily digested food, the main component in many sweet and savory recipes, as well as essential in many other recipes due to its binding properties. They are a cheap source of protein, rich in vitamins and essential minerals.

The egg is a very special food, due to its structure and nutritional value that it provides. Besides being a great source of protein and other nutrients, plays a major role in national and international cuisine. The egg can be cooked in various, ways: boiled, poached, fried, scrambled, and even used as an ingredient in other preparations can improve the aroma, flavor, color, texture and nutritional value.

Most common eggs consumed by human are chicken, duck, goose and quail eggs.

In eggs structure we can differ 3 parts, the white, yolk and shell:
The shell represents 10, 5% of the total weight of the egg.
The yolk represents 31 % of the total weight of the egg.
The white represents 58.5% of the total weight of the egg.

Egg yolk has a high nutritional value, provide a large amount of complete protein, vitamin A, D, E, B6, B12, iron, calcium, phosphorus and potassium. The internal structure of the yolk is like a serial of concentric spheres, which when they are cooked becomes one. The yolk is protected and differenced from the clear by a membrane sac. The yellow color is given by the hen xanthophylls obtained from food intake (alfalfa and grains like corn). The egg yolk also contains a proportion of fats that is where the process contained in this patent is intended to set most of the aroma.

The egg white is a homogeneous colloidal mixture that provides almost two-thirds of the total weight of the egg. It is a virtually transparent structure because nearly 90% of it is composed by water, being the remainder protein (ovalbumin, ovomucin, conalbumin and ovomucoid).

Egg shell is largely composed by calcium carbonate. They may be white or brown depending on the variety of the chicken. The skin color does not affect its quality, taste, nutritional value or shell thickness. The egg shell is porous and it can afford between 7,000 to 17,000 pores, which gives a high degree of permeability.

Vacuum impregnation is a technique used both in the food industry and in the field of restoration. This technique is used for salting or marinating meat and fish, as well as to enrich foods with bioactive compounds. It consists in subjecting the solid food to a very high vacuum in the interior of a liquid to extract the air from their pores, and small part of their juices and water of constitution. By restoring the atmospheric pressure air containing pores absorb liquid or gas that is around.

Related patents as ES1057342U that is a pot that allows vacuum impregnation and vacuum cooking in food. In turn, the US3758256 patent describes methods for salting the eggs by immersing eggs in a salt dissolution and subjecting them to pressure.

However, none of these patents relates to the use of aaromas in food, or its incorporation. The procedure described in the present invention is based on the use of the impregnation of food (eggs) with a gaseous medium in which the aromas are in suspension. The main advantage we may cite the speed of the process, as current techniques for flavoring eggs last for days compared to 2-5 hours of the proposed method. When performing the vacuum process are facilitated diffusion mechanisms through the porous shell of the egg while minimizing the processing time.

### DESCRIPTION OF THE INVENTION

By the present invention all the problems related above are solved and it is able to obtain flavored eggs without affecting the nutritional properties of them, to be highly attractive to the consumer. This invention provides a new type of egg, which has given organoleptic characteristics that allow the development of new food dishes within the scope of the restoration, which add value to them and are pleasing to the final consumer and to facilitate the development of existing dishes dishes allowing the elimination of certain foods in the recipes used only for flavoring.

The main advantage presented by the present invention is that the aromatization of the eggs is achieved without having to carry out an aroma impregnation by dipping the egg in a solution. In this way ensures that the aroma is impregnated in the yolk fat, giving it a nice flavor to the consumer. As the carrier medium of a gas smell does not interfere with the characteristics of the product (egg), using a liquid as a carrier of aroma can change the product composition (increased water content), so the procedure is not advantageous to provide no additional element to the product, only the aroma.

Therefore a first aspect of the present invention relates to eggs comprising at least one aromatic additive.

Preferably the eggs are selected from the group consisting of poultry eggs or reptile origin, preferably poultry. Preferably the eggs of poultry origin were selected from the group consisting of chicken eggs, goose, ostrich, duck, quail or goose.

Moreover the aromatic additives are selected from this group: soluble flavors, water-soluble emulsions, aromatic essential oils, as well as the food itself to transfer the aroma. Preferably the aromatic additives come from meat, fish or vegetables.

Meat aromatic additives are selected from: bacon, sausage, pork or sausage, but it could be considered any other aroma from any type of meat.

Vegetable aromatic additives are selected from: truffles, tomatoes, peppers, onions, artichokes, or zucchini, but could be considered of interest from any other flavor of any plant or vegetable.

A second aspect of the present invention relates to a method of producing flavored egg comprising the following steps:
a) removal of the air present inside the egg by applying vacuum, and
b) restoration of atmospheric pressure by adding an air saturated with the aromatic additive

According to a preferred experience during the extraction stage of the air inside the egg, they are introduced inside a sealed chamber and subjected to a vacuum stage at a pressure of between -0.4 and -0.99 bars, preferably at a pressure of -0.9 to -0.95 bars.

According to another preferred experience during the extraction stage of the air inside the egg, according to another preferred embodiment, the extraction stage lasts from 1 to 300 minutes, preferably from 20 to 60 minutes, preferably for 30 minutes.

By applying pressure and the time of application of this pressure allows both the extraction of air inside the chamber and the air inside the egg. This allows restoring the atmospheric pressure air into the interior can be impregnated with the desired aroma.

According to another preferred experience, the stage of restoration of atmospheric pressure, is performed so that the air enters the vacuum chamber and inside the egg is saturated with the desired aromatic additive.

Preferably the aromatic additives are selected as mentioned above.

According to another preferred experience the impregnsayion time runs from 0 to 48 hours, preferably from 1 to 10 hours, more exactly from 2 to 5 hours.

In this way ensures that the aroma is retained by the egg, giving the desired organoleptic characteristics.

According to another preferred experience, the air impregnation which restores the atmospheric pressure inside the chamber can be done at least one of the following techniques:
a) Aroma dossification: the air that is introduced to restore the atmospheric pressure is passed through an aroma dispenser which introduces the desired, aromatic additive. This allows the air in the interior of the chamber is saturated with the aroma.
b) Saturation of the environment by direct application of aroma, within the chamber aromatic additive is introduced directly or item type gauze or cotton soaked with the desired aromatic additive, so that the air inside the chamber is saturated with the additive and.
c) Saturation of the environment through direct contact with food: inside the chamber is placed directly food containing the desired aromatic additive, so that the air inside the chamber is saturated with the aroma that comes directly from food and this could be part of the egg.

According to another preferred experience, the egg is additionally introduced into a solution with the desired flavor, so that the atmospheric pressure is restored flavored dissolution goes inside the egg and provides the aroma to it.

A third aspect of the present invention relates to a food product comprising flavored eggs.

A fourth aspect of the present invention relates to the use of the above food product for human consumption and / or animal.

In the present invention aromatic additive means any taste, aroma or fragrance used or useful in the food industry as well as any flavor, aroma or fragrance from any food, for example the aroma of bacon, sausage or onion.

Throughout the description and claims the word "comprise" and its variants are not intended to exclude other technical features, additives, components or steps. For those skilled in the art, other objects, advantages and features of the invention will become in part of the description and partly from the practice of the invention. The following examples and figures are provided by way of illustration and are not intended to be limiting of the present invention.

### BRIEF DESCRIPTION OF FIGURES

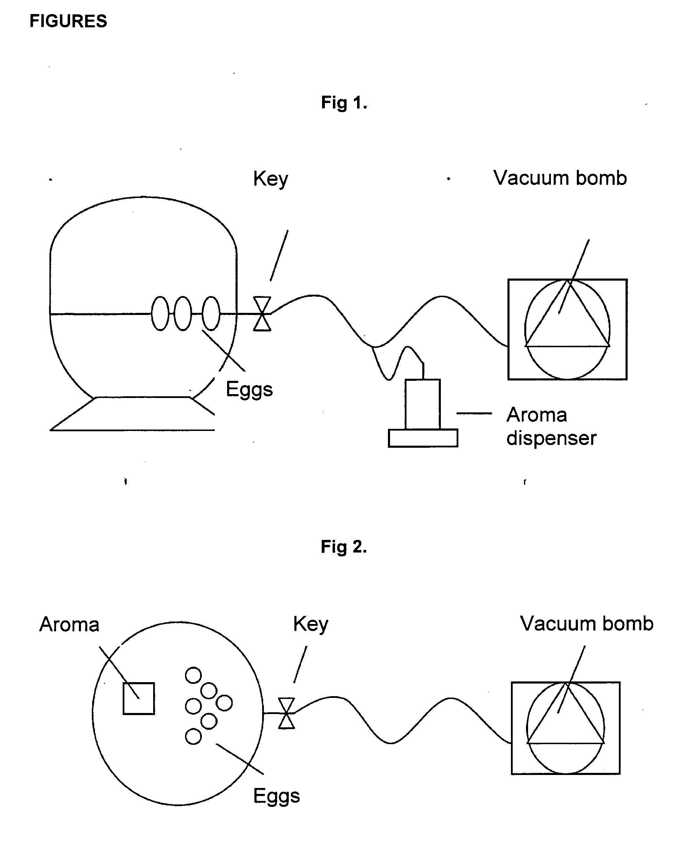

**FIG. 1**. Shows a schematic of the system to flavor the eggs through a aroma dispenser.
**FIG. 2**. Shows a schematic of the system to flavor eggs, in which the aroma is in the interior of the chamber where the eggs are present.

### EXAMPLES

### Below is illustrated by an example, the process of eggs aromatization.

For the aromatization, three eggs were introduced in a desiccator with 5 ml of truffle aroma to a concentration of 100% and apply vacuum to the desiccator at a pressure of -0.95 bar during 10 to 30 minutes. After this time the atmospheric pressure was restored by opening the key and the eggs were kept in the desiccator in an atmosphere saturated with the aroma for a period of 2, 3 and 5 hours

### Results

To obtain results, sensory analysis was performed with a panel of 9 tasters trained. This panel of tasters were given to test various products obtained and they rated on a scale of 1 to 10, being 1 minimum and 10 maximum, truffle flavor intensity of the products, being eggs acceptable from 5.

The results obtained are presented in the following table:

**Table 1**

| **T° VAC (minuts)** | **T° IMP (hours)** | **AROMA INT.** | **ACCEPTABLE** |
|---|---|---|---|
| 10 | 1 | 1,22 | NO |
| 10 | 2 | 1,67 | NO |
| 10 | 3 | 2,44 | NO |
| 10 | 5 | 1,11 | NO |
| 30 | 2 | 5,33 | YES |
| 30 | 3 | 6,67 | YES |
| 30 | 5 | 8,33 | YES |

where:
T ° VAC: time in minutes that vacuum was applied to the products.
T ° IMP: time in hours that the products were maintained in an atmosphere saturated with the aroma.
AROMA INT.: Intensity of the aroma in the final product valued from 1 to 10 with 1 being nothing and 10 being very intense flavor.

## Claims

1. Eggs comprising at least one aromatic additive.

2. The eggs according to claim 1, wherein said eggs are selected from the group consisting of eggs from poultry or reptile origin.

3. The eggs according to claim 2, where the origin is poultry.

4. The eggs according to claim 3, which are selected from the group consisting of, chicken, goose, ostrich, duck, quail or goose eggs.

5. The eggs according to any one of claims 1 to 4, wherein the aromatic additive is selected from the group consisting of liposoluble flavors, water-soluble, aromatic emulsions, and essential oils.

6. The eggs according to claim 5, wherein the aromatic additives come from meat, fish or vegetables.

7. Process for flavoring eggs comprising the following steps:
a) removal of the air present inside the egg by applying vacuum, and
b) restoration of atmospheric pressure by adding an air saturated with the aromatic additive.

8. The process according to claim 7, wherein the step of removing the air inside the egg, eggs is placed inside a sealed chamber and subjected to a vacuum stage at a pressure comprised between -0.4 and -0.99 bars.

9. The process of claim 8, wherein the pressure is comprised between -0.9 and -0.95 bars.

10. The process according to any of claims 7 to 9 wherein the extraction stage lasts from 1 to 300 minutes, preferably from 20 to 60 minutes, more preferably 30 minutes.

11. The process according to any of claims 7 to 10, wherein the impregnation time is comprised from 0 to 48 hours, preferably from 1 to 10 hours, more preferably from 2 to 5 hours.

12. The process according to any one of claims 7 to 11, wherein the impregnation step is performed by one of the following techniques:
a) dossification of the aroma;
b) saturation of the atmosphere with the aroma by direct application, or
c) saturation of the environment through direct contact with food.

13. The process according to any one of claims 7 to 12, wherein the egg is inserted into a dissolution with the desired flavor, so when atmospheric pressure is restored flavored dissolution goes into the egg and provides the aroma to it.

14. A food product comprising flavored eggs according to any one of claims 1 to 6.

15. Use of flavored egg of any of claims 1 to 6 or food product of claim 14 for human consumption and / or animal.
